# EUROPEAN PATENT SPECIFICATION

(11) **EP 2 050 504 B1**
(45) Date of publication and mention of the grant of the patent: **20.12.2017**
(21) Application number: 08166246.2
(22) Date of filing: 09.10.2008
(51) Int. Cl.: B02C 17/18

(54) **A discontinuous grinding mill for ceramic materials**
Diskontinuierliche Schleifmühle für keramische Materialien
Moulin de broyage discontinu de matériaux céramiques

(30) Priority: 18.10.2007 IT RE20070110
(43) Date of publication of application: 22.04.2009
(73) Proprietor: SACMI Cooperativa Meccanici Imola Società Cooperativa, 40026 Imola (BO) (IT)
(72) Inventor: Casadio, Simone, 40026 Imola (Bologna) (IT); Varani, Alex, 40026 Imola (Bologna) (IT)
(74) Representative: Corradini, Corrado

(56) References cited:
- EP-A- 1 616 623
- DE-A1- 3 146 365
- FR-A- 525 689
- US-A- 1 907 785
- US-A- 2 122 399
- US-A- 4 801 100
- US-A- 4 887 773

## Description

The present invention relates to a discontinuous grinding mill especially though not exclusively suitable for use in preparation of doughs in the ceramic sector.

In the field of ceramics it is known to prepare doughs through wet fragmentation of the raw materials and the addition of specific additives during the fragmentation operation itself, until a homogeneous slip having the desired granulometry of the powders in suspension is obtained.

According to the prior art, the fragmentation process comprises three successive stages, starting with a crushing stage and ending with a refining stage.

For such an operation in the field of ceramics grinding mills are known and generally used in which fragmentation is carried out by the collisions, and in any case by the interactions between grinding bodies that are generally spherical in shape.

For the different fragmentation stages the grinding bodies must be of different sizes, decreasing as the process passes from the crushing stage to the refining stage.

Moreover, for each fragmentation stage, for which grinding bodies of specific sizes are used, an optimal speed is used to maximise processing efficiency, processing times and energy consumption of the grinding plants.

In particular, grinding bodies of various sizes are located internally of the grinding chamber. In order to optimise the energy consumption of the grinding process, operating cycles of disconintinuous mills have been set up and finely tuned that vary the rotation velocity of the drum during machine operation, in order to maximise the effect of the dynamic action in the various grinding stages (collision in crushing, pressing and rubbing in refining).

A first known type of discontinuous grinding mill comprises a horizontal-axis cylindrical drum. The cylindrical drum is provided with an outer shell, closed by an entry-end base plate and a bottom base plate, and a loading mouth for the material to be milled, which loading mouth is large, even large enough to admit personnel so that periodic inspections of the drum can be made, in order for them to be cleaned and to allow air to enter when unloading the slip.

In a diametrically opposite position on the cylindrical surface of the grinding drum there is a second mouth for unloading the slip, being considerably smaller than the loading mouth.

At the unloading mouth, normally closed by a hatch, when unloading a valve can be positioned in order to act by rotation to a quarter of a rrevolution of its check element; the valve is provided with a mesh projecting internally of the drum for preventing exit of the grinding bodies.

During normal functioning of the mill, the unloading valve must be removed since otherwise the mesh would be damaged by the grinding bodies.

When opened at the end of the grinding operations, the discharge valve lets the slip run downwards, retaining the grinding bodies in the drum.

This solution however exhibits some drawbacks, in particular due to the fact that after stopping the grinding drum and before the valve is opened, the grinding drum has to be rotated in order to turn the unloading mouth upwards and in an opposite position to the unloading position, and opening it and mounting the unloading valve thereon.

The drum then has to be rotated by 180° and the loading mouth opened to allow ingress of air, and the unloading mouth has to be turned downwards in order to open the unloading valve.

Then, before a further grinding cycle, it is necessary to remove the unloading valve with the relative mesh filter which otherwise would be damaged during the grinding, on coming into contact with the grinding bodies.

These operations are laborious and difficult, as well as causing undesired downtimes with a consequent increase in costs, together with a loss in efficiency.

Further, these operations are not completely susceptible to automation, and involve the use of specialised personnel.

A second known type of discontinuous grinding mill comprises a horizontal-axis cylindrical drum, destined to rotate about the axis in both an operative direction and in an opposite direction. In this second case the cylindrical drum is provided with its own means for evacuating which comprise an outlet mouth afforded in the outer shell and at least a discharge tube associated thereto.

In this type of mill the loading of the material is done at the axis of the drum by means of an Archimedes screw or another similar device.

The drum consequently comprises a single hatch for inspection.

In particular, the discharge tube is provided with a first end associated to the outlet mouth and a second end open to the outside, and winds around the outer shell in a same direction as the operating rotation direction of the cylindrical drum.

In this solution, in more detail, the discharge tube is wound about the outer shell of the cylindrical drum, with a winding angle of at least 180°, and in any case in general not below 270°.

This second solution is described in Italian patent application RE2004A000086, (family member of EP1616623) to which reference is made for the sake of completeness of information. With this solution the emptying of the cylindrical drum, after grinding, is done differently with respect to the first described known solution.

The drum is set in rotation in the opposite direction to the rotation direction used during the grinding operations and the slip is unloaded towards the outside, while the grinding bodies are stopped by a grid located at the outlet mouth. In this operating condition, the outlet mouth is ahead, during rotation, of the open end of the corresponding discharge tube; therefore, when the outlet mouth is at a lower height than the level of the material in the drum, the slip flows through the conduit of a connecting element internally of the discharge tube, where, thanks to the rotation of the cylindrical drum the slip is brought to meet the open end and thus exits to the outside.

For each complete rotation of cylindrical drum in the emptying rotation direction, part of the slip contained in the internal chamber of the rotating drum is evacuated to the outside, and this stage of evacuation can be protracted up until emptying is complete.

The second solution exhibits a first drawback due to the fact that the unloading of the slip by rotation of the drum makes it necessary to predispose a collection casing which surrounds the unloading opening in order to prevent uncontrolled exit of the slip and to convey it into underlying collection means.

In turn the casing must be subjected to cleaning and maintenance operations which are additional to those required for the drum.

Further, the second solution is complex and expensive to realise, due to the predisposition of one or more discharge tubes wound about the shell and the underlying collection casing.

The aim of the present invention is to overcome the above-mentioned drawbacks, by providing a discontinuous grinding mill in which the stage of unloading the worked materials is done automatically, without manual intervention by an operator.

A further aim of the invention is to attain the above-cited objective with a constructional solution which is simple, rational and reliable.

These aims are attained with a grinding mill having the characteristics denoted in the claims.

In particular, the present invention has as its object a grinding mill having a horizontal-axis cylindrical drum which rotates about the axis in order to operate the grinding with the aid of grinding bodies, the cylindrical drum being provided with an outer shell closed by a top base plate and a bottom-end base plate, and by means for evacuating the cylindrical drum which means for evacuating comprise at least an outlet mouth afforded in the outer shell, in which a valve is associated to the outlet mouth, the valve being provided with a filter for the grinding bodies, the drum further including a supply inlet of the material to be ground which supply inlet is coaxial to the rotation axis of the drum.

With the invention, the valve can easily be removed from the outlet mouth only when it is necessary to make an internal inspection of the mill, otherwise remaining stably fixed and closing the outlet mouth.

Further, the valve is provided with a filter for preventing the exit of the grinding bodies which filter is arranged practically on a level with the surface of the drum and is not damaged by the grinding bodies during the rotation of the drum.

Further characteristics and advantages of the invention will emerge from a reading of the following description, provided by way of non-limiting example with the aid of the figures of the accompanying drawings, in which:
figure 1 is a lateral view of a discontinuous grinding mill of the invention;
figure 2 is a front view of a discontinuous grinding mill of the invention;
figure 3 is a hatch having a discharge valve of the discontinuous grinding mill of the invention; and
figure 4 is a plan view of a hatch having a discharge valve of figure 3.

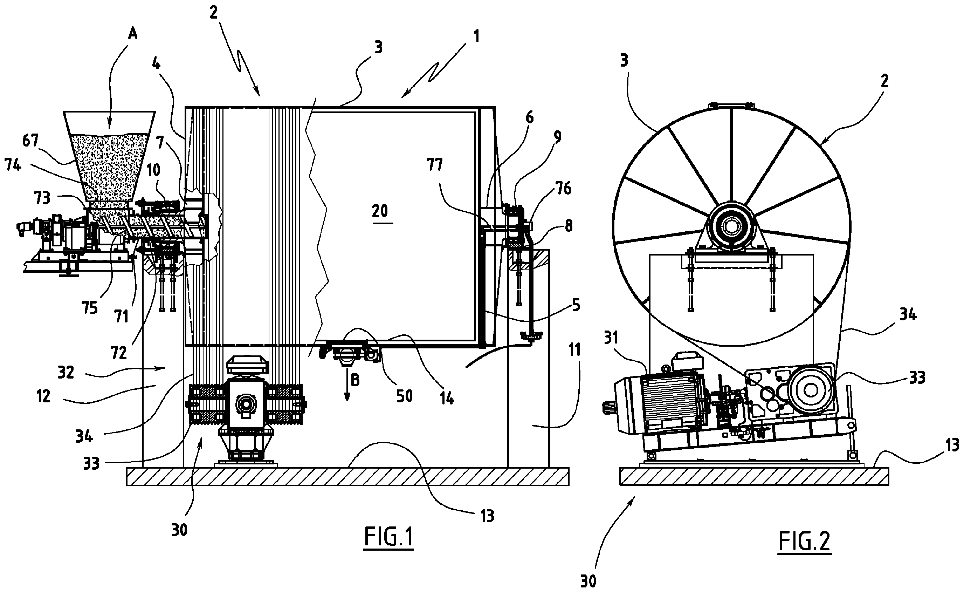

Figures 1 and 2 illustrate a grinding mill 1 for working the raw materials with the aim of obtaining a slip having a predetermined granulometry.

Said discontinuous grinding mill 1 comprises a cylindrical drum 2 having a horizontal axis, which in turn comprises an outer shell 3, an entry-end base plate 4 and a bottom-end base plate 5 which close the outer shell 3 at ends thereof and define an inner chamber 20 into which grinding bodies of suitable sizes are introduced. The cylindrical drum 2 exhibits at least an outlet mouth 14, at which are located means for evacuating the drum 2.

A projecting shaft 6 is associated to the bottom-end base plate 5 (figure 1), which projecting shaft 6 is mounted coaxially to the outer shell 3, while a hollow cylindrical hub 7 is associated to the entry-end base plate 4, which hub 7 also projects and is coaxial with the outer shell 3, and which hub 7 acts as a mouth to set the internal chamber 20 in communication with the outside.

The projecting shaft 6 and the hollow cylindrical hub 7 couple, with the interposition of the bearings 8, respectively with the supports 9 and 10 which support the cylindrical drum 2 and enable it to rotate about the axis thereof. Both of the supports 9 and 10 are fixed to two sturdy abutments, 11 and 12 respectively, which keep the cylindrical drum 2 in a raised position, and suitably spaced, with respect to the plane of the ground 13.

The discontinuous mill 1 also comprises an actuation device 30 of the cylindrical drum 2, so that the drum 2 can be set in rotation (see figs. 1 and 2).

Said actuation device 30 comprises a gear reducer 31 which drives the cylindrical drum 2 via a belt transmission 32 (see fig. 2); the belt transmission 32 has a pulley 33 connected directly to the gear reducer 31, and a belt 34 wound on the pulley 33 itself and on the outer surface of the outer shell 3 at the entry-end base plate 4 (see fig. 1).

As can be seen from fig. 1, an Archimedes screw device 70 is mounted inside the hollow cylindrical hub 7, which screw acts as a loading system of the raw materials, which are conveyed thereto thanks to a hopper 67.

The Archimedes screw device 70 comprises a cylindrical sleeve 71 provided with a first tract 72 which can be slotted inside the hollow cylindrical hub 7 until it opens into the inner chamber 20, and a second tract 73 which remains on the outside and affords a mouth for introduction of the coarse raw materials, which mouth is in connection with the vertical hopper 67. A helical body 75 is rotatably and coaxially mounted inside the cylindrical sleeve 71, which helical body 75 is moved by an actuation system 76 and is suitable for pushing the raw materials from the mouth with vertical axis 74 up to the inner chamber 20 of the cylindrical drum 2.

The discontinuous grinding mill 1 of the invention is also equipped with means for emptying the cylindrical drum 2.

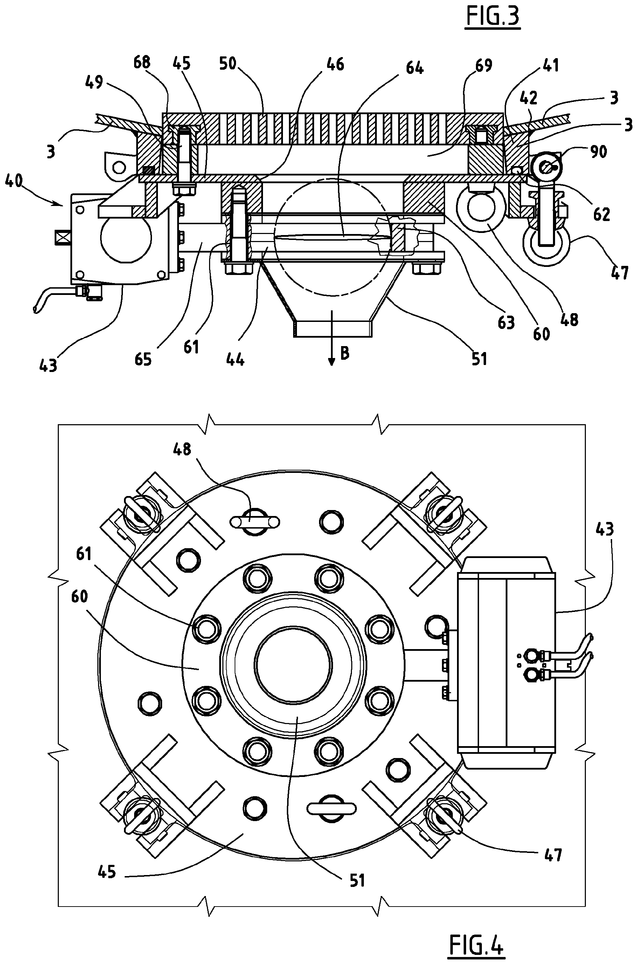

The means for evacuating comprise a hatch 40 connected to the outer shell 3 of the cylindrical drum 2 by means of a frame 41, welded at point 42 to the shell 3 (see figure 3).

A cover 45 is present on the welded frame 41 and is provided with a central hole 46 for passage of the unloading material, and is fixed to the frame 41 by means of fastening ringbolts 47.

It is specified that the term hatch is used to mean the entirety of the outlet mouth 14, the frame 41 and the cover 45.

The rotation of the fastening ringbolts 47 about the respective pivots 90 and the fastening thereof in position enables the cover 45 to seal on the frame 41, possibly with the aid of an o-ring 62.

The cover 45 further includes a projecting ring 60 to which is fastened (by screws 61) the group made up of a butterfly valve 44, in turn provided with a check element 64, and a pneumatic actuator 43 which remotely activates the check element 64, by means of rotation by a quarter-turn of a shaft 65.

The check element 64 of the butterfly valve 44 is in turn sealed, when in the closed position, by a rubber or plastic ring 63.

When the check element 44 is rotated, it pivots on the rubber ring 63, as indicated by the section detail of figure 3.

Further, an outlet funnel 51 is mounted on the group for guiding unloading of the material.

A filter 50 for the grinding bodies is fastened by screws 49 to the cover 45, which filter 50 is preferably made of rubber or plastic and is constituted by a plate provided with a plurality of through-holes for passage of the slip, but which are sufficiently small to retain the grinding bodies during the unloading process. The filter 50 is kept at a certain distance from the cover 45, such as to define an intermediate chamber 69 and to be arranged substantially at a level with the outer shell 3 of the drum.

The screws 49 fastening the filter 50 to the cover 45 screw into threaded inserts 68, sunk in the rubber or plastic material.

Ringbolts 48 are provided at some of the screws 49, which enable the booking of the cover 45 so that it can be raised and the hatch 40 opened, for example when the hatch 40 has to be completely opened for cleaning and/or maintenance operations to be carried out on the drum 2.

In the invention, the functioning of the grinding mill 1 is as follows.

Firstly, the cylindrical drum 2 is activated to rotate about its own axis; the loading stage then begins. The internal chamber 20 is filled with a certain quantity of raw materials, of which a part is made up of clays and the remaining part is hard materials in different proportions, including silicone sands, kaolins, feldspars, etc., all of which are inserted in the direction denoted by the arrow A in figure 1, firstly into the hopper 67, from which they pass to the Archimedes screw 70 and are transported to the drum 2.

Following the loading stage, the grinding stage begins, during which the cylindrical drum 2 rotates, possibly at various speeds.

Thanks to the rotation of the drum and the effect of the grinding bodies on the material to be milled, the grinding stage generates a slip of a desired granulometry.

Following grinding the cylindrical drum 2 is stopped such that the outlet discharge can be opened, and the hatch 40 faces downwards.

By pneumatically activating the actuator 43, the butterfly valve 44 is opened, typically by a rotation by a quarter of a revolution of the check element pivoting on the ring 63, the slip is made to exit through the hatch 40, the body of the valve 44 and thereafter through the outlet funnel 51, in the direction of the arrow B of figure 1, while the filter retains the grinding bodies.

The actuator can be powered in any known way, either electrically or hydraulically or in any other way.

The valve actuator energy is provided via a rotating device 76 connected to the closing hub of the mill and the channel 77 for the energy passes through the hub and rotates solidly with the cylinder.

The exit of the slip is allowed by the fact that the hopper 67 connects the drum 2 with the outside, thus allowing air to enter into the system constituted by the hopper itself, the Archimedes screw and the drum.

When periodic inspections and operations of the inside of the drum, or cleaning operations thereof, are required, the hatch 40 can be opened, unfastening the ringbolts 47 such as to detach the cover 45 and all the elements connected thereto, and raising it with the aid of the raising ringbolts 48.

The invention provides the following advantages.

Firstly, the unloading operations are automatically done, thanks to the activation of the actuator of the valve, and do not require any great use of energy such as in a case in which the drum has to be rotated in the opposite direction to the grinding direction.

Further, discharge valve mounting and demounting operations are not required, as in the prior art, since the valve remains stably fixed to the hatch.

What is more, only one hatch is necessary in the drum, which is used for both the unloading of the slip and the maintenance operations.

The discharge is done efficiently and without undesired dead times.

Finally, the invention is economical to realise, and does not require any complex structures, such as collection casings or the like.

Obviously modifications or improvements, dictated by contingencies or details, can be brought to the invention without its forsaking the ambit of protection as claimed herein below.

## Claims

1. A grinding mill (1) having a horizontal-axis cylindrical drum (2) which rotates about the horizontal axis in order to perform a grinding with aid of grinding bodies, the cylindrical drum (2) being provided with an outer shell (3) closed by an entry-end base plate (4) and a bottom-end base plate (5), with a supply inlet of material to be ground which is coaxial with the horizontal rotation axis of the drum (2), with at least one inspection mouth large enough to admit personnel afforded in the outer shell (3) and means for evacuating the cylindrical drum (2), **characterised in that** said means for evacuating comprise a valve (44) associated to the at least one inspection mouth (14), which valve (44) is provided with a filter (50) for the grinding bodies, the filter being independent from the valve and located upstream the valve and aligned with the wall of the drum and the valve being located outside the drum.

2. The grinding mill (1) of claim 1, **characterised in that** the valve (44) comprises a butterfly check element (64) which can be remotely activated by means of a pneumatic actuator (43).

3. The grinding mill (1) of claim 2, **characterised in that** the check element (64) of the valve (44) is sealingly retained when in a closed position thereof by means of a ring (63) made of plastic or rubber material, on which the check element (64) pivots during a rotation in order to move into an open position thereof.

4. The grinding mill (1) of claim 1, **characterised in that** the valve (44) is mounted on a cover (45), connected to the outer shell (3) of the cylindrical drum (2) by means of a frame (41) welded at a point (42) to the outer shell (3).

5. The grinding mill (1) of claim 4, **characterised in that** the cover (45) is provided with a central hole (46) for passage of unloading material, and is fastened to the welded frame (41) by fastening ringbolts (47).

6. The grinding mill (1) of claim 4, **characterised in that** the cover (45) comprises a projecting ring (60) to which the valve (44) and an actuator (43) of the valve are fixed.

7. The grinding mill (1) of claim 4, **characterised in that** the cover (45) exhibits hooking means (48) for raising the cover (45).

8. The grinding mill (1) of claim 1, **characterised in that** the valve (44) exhibits an outlet funnel (51) for unloading the material.

9. The grinding mill (1) of claim 1, **characterised in that** the filter (50) is made of rubber or a plastic material and is constituted by a plate provided with a plurality of passage holes for the slip, which holes are also sufficiently small to retain the grinding bodies, the plate being arranged practically flush with an internal wall of the drum (2).

10. The grinding mill (1) of claim 8, **characterised in that** the filter (50) is fixed to the cover (45) by screws (49) which screw into corresponding threaded inserts (68) sunk into the rubber or the plastic material.

11. The grinding mill (1) of any of the preceding claims, **characterised in that** the filter (50) is made of rubber or of a plastic material and is constituted by a plate provided with a plurality of passage holes for the slip, which holes are sufficiently small to retain the grinding bodies.

12. The grinding mill of claim 2, **characterised in that** it comprises a rotating device (76) connected to a closing hub of the mill, the hub being provided with a channel (77) for passage of activating energy for the actuator, passing through the hub and rotating solidly with the cylinder.

## Patentansprüche

1. Mahlwerk (1) mit einer horizontalachsigen Zylindertrommel (2), die sich um die horizontale Achse dreht, um einen Mahlvorgang mit Hilfe von Mahlkörpern vorzunehmen, wobei die Zylindertrommel (2) mit einem äußeren Mantel (3) versehen ist, der durch eine Einlassend-Basisplatte (4) und eine Bodenend-Basisplatte (5) verschlossen ist, mit einem Speiseeinlass des zu mahlenden Materials, der koaxial zur horizontalen Drehachse der Trommel (2) verläuft, mit wenigstens einer Inspektionsöffnung, die groß genug ist, um Personal im äußeren Mantel (3) und Mittel zum Entleeren der Zylindertrommel (2) zuzulassen, **dadurch gekennzeichnet, dass** die Mittel zum Entleeren ein Ventil (44) umfassen, das mit der wenigstens einen Inspektionsöffnung (14) verbunden ist, wobei das Ventil (44) mit einem Filter (50) für die Mahlkörper versehen ist, wobei der Filter unabhängig von dem Ventil ist und stromaufwärts des Ventils, auf die Wandung der Trommel gefluchtet angeordnet ist und das Ventil außerhalb der Trommel angeordnet ist.

2. Mahlwerk (1) nach Anspruch 1, **dadurch gekennzeichnet, dass** das Ventil (44) ein Schmetterling-Rückschlagelement (64) umfasst, das mittels eines pneumatischen Stellglieds (43) fernbetätigt werden kann.

3. Mahlwerk (1) nach Anspruch 2, **dadurch gekennzeichnet, dass** das Rückschlagelement (64) des Ventils (44) in geschlossener Stellung desselben mittels eines Rings (63) aus Kunststoff- oder Gummimaterial abdichtend gehalten ist, auf dem das Rückschlagelement (64) sich während einer Drehung dreht, um sich in eine geöffnete Stellung desselben zu bewegen.

4. Mahlwerk (1) nach Anspruch 1, **dadurch gekennzeichnet, dass** das Ventil (44) auf einem Deckel (45) angebracht ist, der mit dem äußeren Mantel (3) der Zylindertrommel (2) mittels eines Gestells (41) verbunden ist, das an einem Punkt (42) des äußeren Mantels (3) angeschweißt ist.

5. Mahlwerk (1) nach Anspruch 4, **dadurch gekennzeichnet, dass** der Deckel (45) mit einem zentralen Loch (46) für den Durchtritt von abzuladendem Material versehen und mit dem geschweißten Gestell (41) durch Ringbolzen (47) befestigt ist.

6. Mahlwerk (1) nach Anspruch 4 **dadurch gekennzeichnet, dass** der Deckel (45) einen auskragenden Ring (60) umfasst, an dem das Ventil (44) und ein Stellglied (43) des Ventils befestigt sind.

7. Mahlwerk (1) nach Anspruch 4, **dadurch gekennzeichnet, dass** der Deckel (45) Hakenmittel (48) zum Anheben des Deckels (45) aufweist.

8. Mahlwerk (1) nach Anspruch 1, **dadurch gekennzeichnet, dass** das Ventil (44) einen Auslasskanal (51) zum Abladen des Materials aufweist.

9. Mahlwerk (1) nach Anspruch 1, **dadurch gekennzeichnet, dass** der Filter (50) aus Gummi- oder Kunststoffmaterial hergestellt ist und aus einer Platte besteht, die mit einer Mehrzahl von Löchern zum Durchtritt des Schlickers versehen ist, welche ebenfalls ausreichend klein sind, um die Mahlkörper zurückzuhalten, wobei die Platte praktisch bündig mit einer Innenwand der Trommel (2) angeordnet ist.

10. Mahlwerk (1) nach Anspruch 8, **dadurch gekennzeichnet, dass** der Filter (50) an dem Deckel (45) mit Schrauben (49) befestigt ist, die in entsprechende Gewindeeinsätze (68) eingreifen, die in dem Gummi- oder Kunststoffmaterial versenkt sind.

11. Mahlwerk (1) nach einem der vorstehenden Ansprüche, **dadurch gekennzeichnet, dass** der Filter (50) aus Gummi- oder Kunststoffmaterial hergestellt ist und aus einer Platte besteht, die mit einer Mehrzahl von Löchern für den Durchtritt des Schlickers versehen ist, welche ausreichend klein sind, um die Mahlkörper zurückzuhalten.

12. Mahlwerk nach Anspruch 2, **dadurch gekennzeichnet, dass** es eine Drehvorrichtung (76) umfasst, die mit einer Verschlussnabe des Mahlwerks verbunden ist, wobei die Nabe mit einem Kanal (77) für den Durchtritt von Aktivierungsenergie für das Stellglied versehen ist, der durch die Nabe hindurchtritt und sich einstückig mit dem Zylinder dreht.

## Revendications

1. Broyeur (1) ayant un tambour cylindrique à axe horizontal (2) qui tourne autour de l'axe horizontal de manière à effectuer un broyage à l'aide de corps de broyage, le tambour cylindrique (2) étant muni d'une enveloppe extérieure (3) fermée par une plaque de base d'extrémité d'entrée (4) et une plaque de base d'extrémité inférieure (5), avec une entrée d'alimentation de matériau à broyer qui est coaxiale à l'axe de rotation horizontal du tambour (2), avec au moins une embouchure d'inspection suffisamment grande pour admettre un personnel autorisé dans l'enveloppe extérieure (3) et des moyens pour évacuer le tambour cylindrique (2), **caractérisé en ce que** lesdits moyens d'évacuation comprennent une vanne (44) associée à l'au moins une embouchure d'inspection (14), laquelle vanne (44) est munie d'un filtre (50) pour les corps de broyage, le filtre étant indépendant de la vanne et situé en amont de la vanne et aligné avec la paroi du tambour et la vanne étant située à l'extérieur du tambour.

2. Broyeur (1) selon la revendication 1, **caractérisé en ce que** la vanne (44) comprises un élément de contrôle papillon (64) qui peut être activé à distance au moyen d'un actionneur pneumatique (43).

3. Broyeur (1) selon la revendication 2, **caractérisé en ce que** l'élément de contrôle (64) de la vanne (44) est retenu de manière étanche quand il est dans une position fermée de celui-ci au moyen d'un anneau (63) réalisé en matériau plastique ou caoutchouc, sur lequel l'élément de contrôle (64) pivote durant une rotation de manière à se déplacer dans une position ouverte de celui-ci.

4. Broyeur (1) selon la revendication 1, **caractérisé en ce que** la vanne (44) est montée sur un couvercle (45), connecté à l'enveloppe extérieure (3) du tambour cylindrique (2) au moyen d'un cadre (41) soudé en un point (42) à l'enveloppe extérieure (3).

5. Broyeur (1) selon la revendication 4, **caractérisé en ce que** le couvercle (45) est pourvu d'un trou central (46) pour le passage de matière de décharge et est fixé au cadre soudé (41) par des boulons à oeillet de fixation (47).

6. Broyeur (1) selon la revendication 4, **caractérisé en ce que** le couvercle (45) comprend un anneau en saillie (60) auquel la vanne (44) et un actionneur (43) de la vanne sont fixés.

7. Broyeur (1) selon la revendication 4, **caractérisé en ce que** le couvercle (45) présente des moyens d'accrochage (48) pour soulever le couvercle (45).

8. Broyeur (1) selon la revendication 1, **caractérisé en ce que** la vanne (44) présente un entonnoir de sortie (51) pour décharger la matière.

9. Broyeur (1) selon la revendication 1, **caractérisé en ce que** le filtre (50) est réalisé en caoutchouc ou un matériau plastique et est constitué par une plaque munie d'une pluralité de trous de passage pour le glissement, lesquels trous sont également suffisamment petits pour retenir les corps de broyage, la plaque étant agencée pratiquement en affleurement avec une paroi interne du tambour (2).

10. Broyeur (1) selon la revendication 8, **caractérisé en ce que** le filtre (50) est fixé au couvercle (45) par des vis (49) qui se vissent dans des inserts filetés correspondants (68) noyés dans le caoutchouc ou le matériau plastique.

11. Broyeur (1) selon l'une quelconque des revendications précédentes, **caractérisé en ce que** le filtre (50) est réalisé en caoutchouc ou un matériau plastique et est constitué par une plaque munie d'une pluralité de trous de passage pour le glissement, lesquels trous sont suffisamment petits pour retenir les corps de broyage.

12. Broyeur selon la revendication 2, **caractérisé en ce qu'**il comprend un dispositif rotatif (76) connecté à un moyeu de fermeture du broyeur, le moyeu étant muni d'un canal (77) pour le passage d'énergie d'activation pour l'actionneur, passant à travers le moyeu et tournant solidairement avec le cylindre.
